# EUROPEAN PATENT SPECIFICATION

(11) **EP 2 574 381 B1**
(45) Date of publication and mention of the grant of the patent: **18.10.2017**
(21) Application number: 12173425.5
(22) Date of filing: 25.06.2012
(51) Int. Cl.: A63F 13/843, A63F 13/214, A63F 13/22, A63F 13/24, A63F 13/92

(54) **Apparatus and method of control for multiplayer gaming**
Vorrichtung und Verfahren zur Steuerung von Mehrspielerspielen
Appareil et procédé de commande de jeu multijoueur

(30) Priority: 29.09.2011 GB 201116763
(43) Date of publication of application: 03.04.2013
(73) Proprietor: Sony Interactive Entertainment Europe Limited, London W1F 7LP (GB)
(72) Inventor: Van Der Meulen, Martijn Roelof, London W1F 7LP (GB)
(74) Representative: D Young & Co LLP

(56) References cited:
- US-A- 4 969 647
- "The Adventures of Cookie and Cream", , 30 April 2001 (2001-04-30), XP055066876, Retrieved from the Internet: URL:http://www.replacementdocs.com/downloa d.php?view.4003 [retrieved on 2013-06-17]
- Christian Spicer: "E3 2011: In-Depth Hands-On PlayStation Vita Impressions", gamerant.com , 14 June 2011 (2011-06-14), XP002698919, Retrieved from the Internet: URL:http://gamerant.com/playstation-vita-i mpressions-spice-90701/ [retrieved on 2013-06-17]

## Description

The present invention relates to an apparatus and method of control for multiplayer gaming.

Two-player videogame devices have traditionally taken one of two forms. In one form the videogame device has one set of controls, and the game is arranged to maintain game state data for two players, enabling the players to take turns on the game.

In another form, the videogame device has two sets of controls allowing both players to play simultaneously. However as videogame devices, and in particular hand-held videogame devices, become both smaller and more complex, it becomes impractical to provide two sets of controls in this manner, so limiting the device, and the games thereon, to modes of play where players take turns.

A solution to this problem is to provide the videogame devices with ad-hoc wireless networking capabilities. With such capabilities, two separate devices can be used to play a shared game, with the players of the game playing simultaneously, each using the controls on their respective hand held videogame device. However, in some circumstances this solution is undesirable.

US 4969647 discloses a portable game device in which a direction joypad is logally rotated when the device switches from a landscape holding mode to a portrait holding mode. EPO Citation XP055066876, 'The Adventures of Cookie and Cream' from http://www.replacementdocs.com/download.php?view.4003 discloses controlling two in-game characters using the left and right halves of a handheld controller respectively.

The present invention seeks to address or mitigate this problem.

In a first aspect, a portable entertainment device is provided in accordance with claim 1.

In another aspect, method of control for a multiplayer videogame is provided in accordance with claim 10.

Further respective aspects and features of the invention are defined in the appended claims.

Embodiments of the present invention will now be described by way of example with reference to the accompanying drawings, in which:
Figure 1A is a view of the front a portable entertainment device according to an embodiment of the present invention, as viewed in normal use.
Figure 1B is a view diagram of the rear a portable entertainment device according to an embodiment of the present invention.
Figure 2 is a schematic diagram of the portable entertainment device according to an embodiment of the present invention.
Figure 3 is a schematic diagram of the portable entertainment device according to an embodiment of the present invention.
Figure 4 is a view of the portable entertainment device according to an embodiment of the present invention.
Figure 5 is a flow diagram of a method of control for a multiplayer videogame according to an embodiment of the present invention.

An apparatus and method of control for multiplayer gaming are disclosed. In the following description, a number of specific details are presented in order to provide a thorough understanding of the embodiments of the present invention. It will be apparent, however, to a person skilled in the art that these specific details need not be employed to practise the present invention. Conversely, specific details known to the person skilled in the art are omitted for the purposes of clarity where appropriate.

Examples of hand-held or portable game devices include the Sony ® PlayStation Portable ® (PSP) and its variants, such as the PSP Go ®, and more recently the Sony PlayStation Vita ® (PSV).

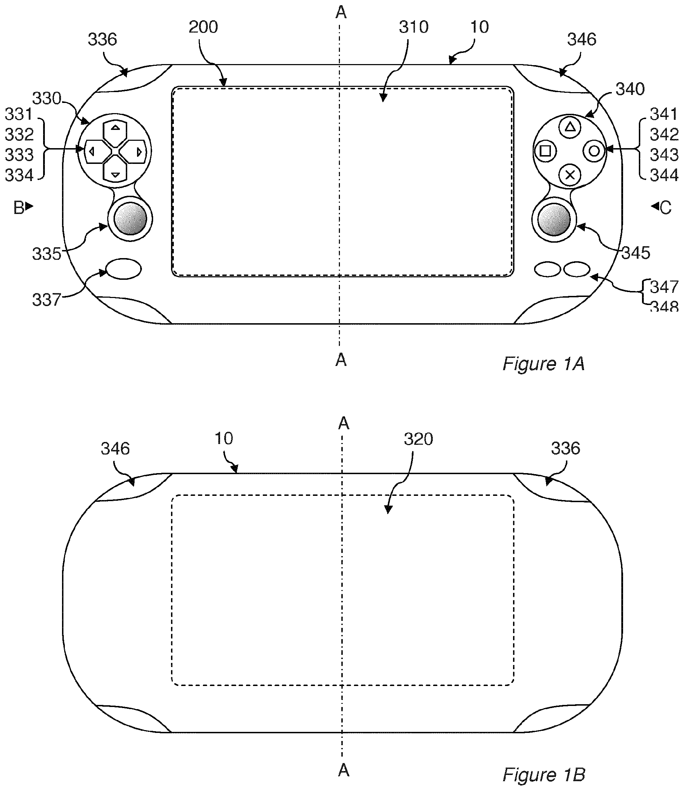

Figures 1A and 1B illustrate an embodiment of a portable entertainment device (PED) 10 as typified by the Sony PlayStation Vita ® (PSV). Figure 1A shows a notional front or top side of the PED, whilst Figure 1B shows a notional rear or bottom side of the PED. The front and rear sides are substantially parallel to each other.

On the front side, the PED comprises a display 200 and optionally one or more loudspeakers (not shown).

In addition, the PED comprises a number of physical controls. To the left of the display, a directional joypad 330 comprises four directional buttons 331-334, and is located adjacent a first joystick 335. In addition a shoulder button 336 is provided at the top-left of the PED. Finally, a button 337 (for example a 'PS' button) may be provided, enabling a user to access the PED's operating system at any time.

To the right of the display, a function joypad 340 comprises four function buttons 341-344. These function buttons are differentiated by their icons, such as a triangle, circle, cross and square. The function joypad is located adjacent a second joystick 345. In addition a shoulder button 346 is provided at the top-right of the PED. Finally, two buttons 347, 348 may be provided, for example providing a 'start' function and a 'select' function.

In typical use, the sets of controls on the left and right side of the PED are used co-operatively by a single user to control a game. Such a typical usage may be to control positional movement of the player within a game environment using either the directional joypad or the left joystick, whilst controlling the direction of view, or a reticule or similar, using the right joystick. Meanwhile, in-game functions just as jumping, firing a weapon, blocking an attack or interacting with an object may be assigned to respective buttons of the function joypad. Meanwhile the shoulder buttons may be used either for less frequent functions, or may be used to provide alternate modes of operation (such as primary or alternate firing modes).

Notably the buttons of the directional joypad and the function joypad are differently shaped, with the buttons of the directional joypad being shaped in response to their respective corresponding direction, whilst the buttons of the function joypad are generally identical in shape.

On the rear side, the PED comprises a rear touch sensitive surface 320 (indicated by the dotted lines) having similar dimensions to the display 200. The rear touch sensitive surface is positioned so as to be substantially aligned with the display along a central axis normal to the display.

Optionally, a transparent front touch sensitive surface 310 (indicated by the dotted lines) is also provided coincident with the display 200. The front and rear touch sensitive surfaces and the display thus have similar dimensions and placements on their respective sides of the device. The touch sensitive surfaces also have a similar resolution of touch localisation.

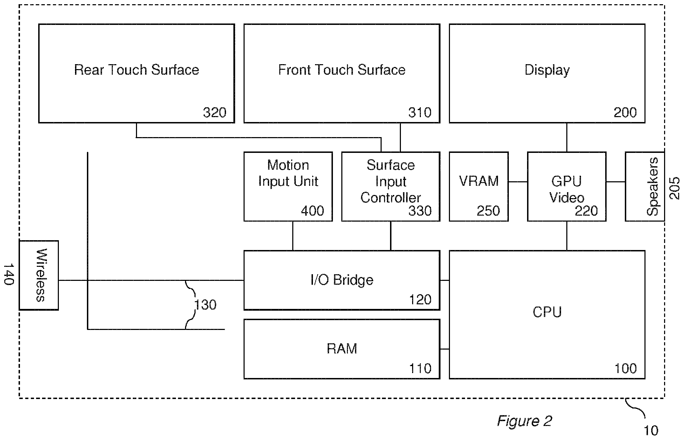

Referring now also to Figure 2, an embodiment of the PED comprises a central processor (CPU) 100 coupled to random access memory (RAM) 110, and optionally to a read only memory (not shown). In addition the CPU communicates with a graphics processing unit (GPU) 220. The GPU has access to video RAM (VRAM) 250. The GPU outputs audio to loudspeakers 205 and/or to a headphone jack (not shown). The GPU also outputs video information to the display 200. The display is typically a liquid crystal display (LCD) but may be an organic light emitting diode display (OLED) or similar suitable display technology.

In addition, the CPU communicates with an input / output bridge (I/O bridge) 120 that co-ordinates communication with peripheral components both integral to and linkable with the PED. In an embodiment of the PED the I/O bridge communicates with a surface input controller 330, which parses inputs from the rear touch sensitive surface and optionally the transparent front touch sensitive surface. The I/O bridge also communicates with an optional motion input unit 400 comprising one or more micro electromechanical (MEMs) accelerometers and/or gyroscopes, to provide up to six axes of motion input (x, y and z axis lateral movement and roll, pitch and yaw rotational movement). The I/O bridge also receives input from the physical controls (buttons and joysticks) shown in Figure 1A optionally via an input control logic (not shown). Finally, the I/O bridge communicates with a bus 130, upon which various peripheral devices may be linked, including one or more wireless communication units 140, such as for example WiFi and / or Bluetooth ®.

It will be appreciated that the CPU 100 may be a single core or multi core processor, such as the ARM® Cortex-A9 core (having 4 cores). Similarly, the RAM may be dynamic ram or may comprise both dynamic RAM and static (flash) RAM units. Likewise, whilst the GPU typically uses dedicated VRAM, alternatively or in addition it may share common RAM with the CPU. Finally, it will be appreciated that the function of the surface input unit may be performed by the CPU itself.

The rear touch sensitive surface may be a conventional capacitance touchpad or panel such as that found in laptops. Such a touchpad typically comprises two layers of parallel conductive lines separated by an insulator and arranged at right angles to each other. A high frequency signal is swept through every respective pairing of lines between the two layers. The measurable current for each pair is then proportional to the capacitance at their point of intersection. When a user's finger is placed at or near that intersection, however, some of the electrical field between layers is shunted to ground, changing the effective capacitance and hence the measured current. Precise localisation of the user's finger can be achieved by measuring changes in capacitance at nearby points of intersection, which will be proportional to their respective distances from the finger. So-called multi-touch operation of the touchpad can be achieved by detecting distinct peaks in capacitance change at separate intersection points on the pad. Meanwhile, movement of a user's finger or fingers can be estimated from successive points of intersection where contact is detected.

A front touch sensitive surface for use with the display operates in a similar manner to the rear touch sensitive surface, but in this instance the conductive lines are typically transparent (as a non limiting example, being formed by a deposition of indium tin oxide), and the insulator between two layers is provided by all or part of the display window (e.g. a glass layer); typically a further transparent protective layer is then provided on top of the upper conductive layer.

It will be appreciated however that any suitable touch sensitive technique may be used for either touch panel.

It will also be appreciated that whilst not shown in the figures for the purposes of clarity, the PED comprises an array of switches aligned with the buttons described previously, and also two joystick input mechanisms, each of which is able to provide input to the I/O bridge, optionally via an input control logic (not shown). Similarly not shown, the PED also comprises power distribution lines to various components and one or more sources of power, such as an input socket (for example a conventional DC power socket, or alternatively or in addition a USB socket, not shown). Such an input socket may also be used to charge one or more batteries (also not shown). Such batteries may be user removable or may be sealed in the device. Other components not shown include, for example, an optional microphone.

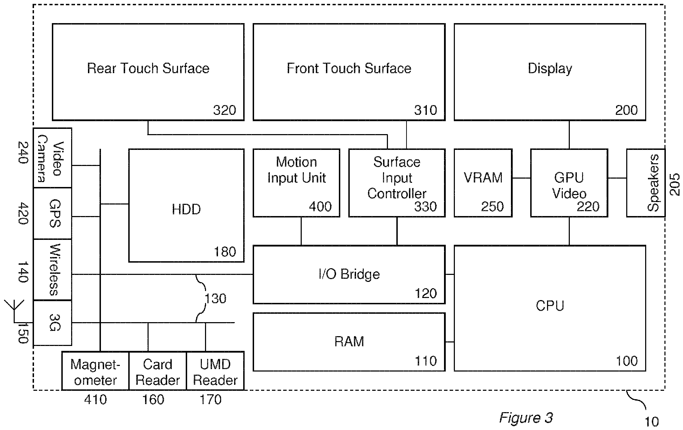

Referring now also to Figure 3, an embodiment of the PED may comprise one or more additional components, either integrated within the device or connectable to it. The additional components include, but are not limited to, the following.
a) A card reader 160 suitable for reading from and optionally writing to memory cards, such as the Sony ® Memory Stick ®, or alternatively legacy memory cards such as those used by the Sony ® Playstation 2 ® entertainment device. Such a reader may be integral to the PED or connect to the bus 130 via a USB connection.
b) A universal media disk (UMD) reader 170 or other optical disk reader (such as DVD or Blu-Ray®), for accessing media and/or game content stored thereon. Such a reader may be removably connectable to the bus 130 via a USB or proprietary connection.
c) A magnetometer 410 for determining compass direction, mounted integral to the PED either on the bus 130 or as part of the motion input unit 400.
d) A third generation (3G) or other mobile telephony module 150. In an embodiment, the module and aerial are integral to the PED, and optionally the aerial is shared with or otherwise coupled electromagnetically with other wireless units in the device for the purpose of transmission and reception. Alternatively the module may be removably connectable to the PED, for example via USB port or a personal computer memory card international association (PCMCIA) slot.
e) A hard disk drive (HDD) 180 integral to the PED, providing bulk storage for audio / video media, downloaded games, and the like.
f) A GPS receiver 420. Again the GPS receiver may share an aerial with one or more other wireless units (such as WiFi) within the PED. Map information, where used, may be stored locally at the receiver, or in flash RAM of the PED, or on an HDD of the PED.
g) One or more video cameras 240, typically each comprising a charge coupled device (CCD) optical sensor and suitable optics for imaging onto the CCD. The resolution of the CCD may for example be 640x480 pixels, but may be any suitable resolution, such as for example 1920x1080 pixels (full HD). In an embodiment the or each video camera is integral to the PED (for example with one mounted on each of the front and rear surfaces), but alternatively may be removably connectable to the bus 130 via a USB or proprietary connection. An embodiment of the PED comprises two such video cameras 240 forming a stereoscopic pair. Another embodiment of the PED comprises a forward facing camera and a rearward facing camera.

In operation, the CPU accesses an operating system that is resident for example on a ROM, flash RAM or a hard disk. The operating system co-ordinates operation of the various functions of the PED and presents a user interface to a user of the device. The user interface will typically comprise graphical outputs via the display and touch based inputs, but may also include audio outputs and/or motion-based inputs.

The touch based inputs to the PED are peculiar to the arrangement of a display on the front of the PED and a correspondingly positioned touch sensitive surface (or 'panel') on the rear of the PED. This allows the user to treat the rear panel as a proxy for the display (in other words, address actions and inputs to the rear touch panel as if to the display, and/or point on the panel in order to point to the display). Thus for example, the user can point to icons or other displayed features from apparently underneath the display by touching the rear touch panel at the corresponding position.

It will be appreciated that unlike a laptop touch panel, the rear touch panel has a substantially 1:1 scale relationship with the screen, thereby not just enabling motion of a mouse pointer on screen that corresponds to motion of touch on the panel (for example), but furthermore also enabling direct placement of such a mouse on the screen at the position corresponding to the touch on the panel, because as noted above the panel can be understood to represent the screen (i.e. act as a proxy).

Notably, because of the relative orientation of the display and the rear touch panel, left-to-right mapping across the rear touch panel is therefore reversed to correspond to the appropriate position on the display. Optionally this reversal is switchable depending on the orientation of the device as detected by the motion input unit, and/or according to what peripheral devices are connected; for example if the PED were connected to a television and then held display-down for use, the left-to-right mapping of the touch panel input may not be reversed.

Use of the rear touch panel as a proxy for the display advantageously allows interaction with the graphical output of the device without the user's hand or fingers obscuring the display or marking the display window.

In addition, the subjective experience of controlling the displayed interface from behind or underneath the screen allows for new modes of user interaction; for example selection, highlighting or magnification of a screen element may be achieved by a user pushing the element 'toward' them from behind the device. For a capacitance based touch panel, an increase in pressure on the rear panel (i.e. a push) can be detected by a flattening of the user's finger, which results in a larger covered area and hence more points of intersection in the panel having reduced capacitance. Conversely a reduction in pressure reduces the number of intersection points where touch is detected.

In conjunction with a similar but transparent front touch sensitive surface overlaid on the display, further modes of interaction become possible. For example, objects may be selected by being pinched between thumb and forefinger, with the thumb and forefinger touching the front and back touch panels respectively. The object may then be moved around, and, for example, activated by using a squeezing action between thumb and forefinger.

Further modes of interaction rely on the correspondence between position and / or motion of the user's fingers on the two touch panels. For example in a video playback application, stroking a finger across only the top touch panel may be interpreted as a fast-forward or rewind command (depending on direction), whilst a pinch hold followed by corresponding movement left or right of both fingers may be interpreted as selection of a specific point in playback (i.e. where the total playback time is scaled to the width of the touch panels). By contrast, however, a pinch hold followed by both fingers moving in opposite directions to each other may be interpreted as a twisting action, and adjusts a virtual volume dial. A similar grammar of interaction could be used for example for document or e-book navigation, with scrolling, page selection and zoom replacing the above playback functions.

Referring again now to Figure 1A, the controls of the PED on either side of the display can be categorised as one of two types. The first category are the gameplay controls. These controls (buttons, joysticks or the like) are used to change the state of play within the game. The state of play comprises the position and direction of the player within the game, and whatever function they are performing within the game, such a jumping, fighting, or interacting with in-game objects. The majority of the controls on the PED are gameplay controls. The remaining controls form the other category, which may be called the system controls. These controls relate to control of the game, rather than control within the game. For example, these controls typically comprise the system-interrupt button 337 (for example the so-called 'PS' button), that allows a user to summon an interface provided by the operating system, enabling the user for example to check for messages whilst suspending the game, or to force closure of the game from the operating system. In addition these controls typically comprise a start button, enabling the start or pause of the game, and a select button, which may be used to open or interact with game configuration menus.

In an embodiment of the present invention, the gameplay buttons of the PED are substantially symmetrical about the display in terms of their layout, but are not wholly symmetrical in terms of their individual shape or markings, as seen in Figure 1A. Moreover when playing a single-player game, they are not symmetrical in terms of their function.

In particular, in a normal single-player mode, or a multiplayer mode where each player takes turns to play by themselves (or each has a respective PED in wireless connection with the other) then as noted previously the two joysticks may be used for different purposes (such as control of positional movement with the left joystick, and control of viewpoint or reticule movement with the right joystick), and similarly the left and right joypads are also differentiated, with the directional joypad on the left typically also being used for control of positional movement, and the function joypad on the right typically being used for the selection of in-game functions of the player.

Hence in a single player game the controls are physically symmetrical, but functionally asymmetrical.

However, the inventor has appreciated that as a result, the controls as laid out for single-user operation in a so-called landscape mode contain enough physical symmetry for equal levels of two-user operation in a so-called portrait mode, where each user accesses a respective half of the controls.

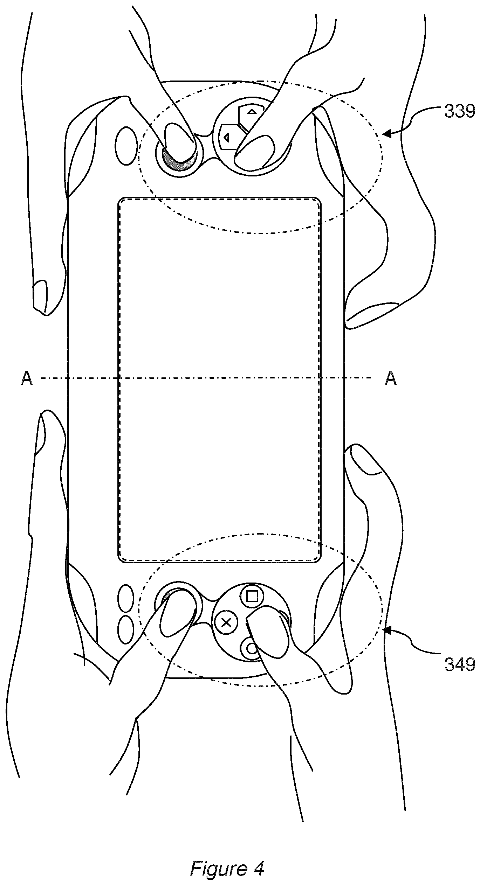

Hence, and referring now also to Figure 4, in an embodiment of the present invention, a game is configured (for example under control of suitable software) to have a multiplayer mode that takes advantage of the physical symmetry of the gameplay controls, by assigning to the left and right sets of gameplay controls at least a partial functional symmetry to enable similar functionality for two players.
In this mode, two users are given respective control within a game by using one of the subset of gameplay controls on the left or right of the screen (as illustrated in Figure 1A). Thus, for example, a first player may use some or all of the left joystick 335, the directional joypad and its buttons 331-334, and the left shoulder button 336, which together form one subset of gameplay controls 339 in this mode. Meanwhile a second player may use the right joystick 345, the function joypad and its buttons 341-344 and the right shoulder button 346, which together form the other subset of gameplay controls 349 in this mode.

Hence in this multiplayer mode, each player is assigned typically half the available gameplay controls on the device, and due to the reflective physical symmetry of the control layout on the device, each player gets a similar distribution of controls. This means that whilst each player has access to fewer controls than in a single-player game, they both have access to a similar range of controls. For example, in an embodiment of the present invention both players have access to a joystick, four buttons on a joypad (despite these being different shapes and having different markings for each player) and one shoulder button.

The reflective symmetry of the layout is typically with respect to a line of symmetry (A-A) bisecting the display, though it will be understood more generally that the exact line of symmetry is not essential, provided that the layout of the gameplay buttons on each side of the display are substantially a mirror image of each other.

Notably, the layout of the gameplay buttons is reflectively symmetrical about the centre of the display, but not rotationally symmetrical. As a result, when viewed from opposite ends of the PED (viewpoints B and C), the layout of the respective gemeplay controls as used in multiplayer mode are reversed.

That is to say, the user of the first set of gameplay controls 339, when holding the PED at one end (viewpoint B), will see the directional joypad to the left of the joystick and their shoulder button to the far left. Meanwhile the user of the second set of gameplay controls 349, when holding the PED at the other end (viewpoint C), will see the function joypad to the right of the joystick and their shoulder button to the far right. In other words, the positional relationships of at least come of the controls are reversed for each player.

However, whilst the physical layout of the two sets of gameplay controls uses reflective symmetry and not rotational symmetry, at least some of the corresponding functionality assigned to those controls uses rotational symmetry with respect to the corresponding control of the other set.

To explain by example, the directional input from the joysticks is interpreted using rotational symmetry. Thus for example, when viewing the PED face-on as illustrated in Figure 1A, then in multiplayer mode, moving the first (left) joystick 335 downwards is interpreted as 'right' from the viewpoint B whilst moving the second (right) joystick 345 upwards is interpreted as 'right' from the viewpoint C. Similarly, in multiplayer mode, moving the first (left) joystick 335 right is interpreted as 'up' from the viewpoint B whilst moving the second (right) joystick 345 left is interpreted as 'up' from the viewpoint C.

Meanwhile, the functions of buttons on each joypad may be assigned either using reflective or rotational symmetry with respect to the other joypad.

Thus for example, when viewing the PED face-on as illustrated in Figure 1A, in the case of functional reflective symmetry about the line of symmetry A-A, the function of the directional joypad button marked with an 'up' arrow would be the same as that of the triangle icon button on the function joypad. Similarly the right arrow and square icon buttons would have the same function, the down arrow and cross icon buttons would have the same function, and the left arrow and circle icon buttons would have the same function.

Alternatively, again when viewing the PED face-on as illustrated in Figure 1A, in the case of functional rotational symmetry with respect to the two joypads, then the function of the directional joypad button marked with an 'up' arrow would be the same as that of the cross icon button on the function joypad. Similarly the right arrow and square icon buttons would have the same function, the down arrow and triangle icon buttons would have the same function, and the left arrow and circle icon buttons would have the same function.

Thus in summary, the set of single-player gameplay controls is divided into two multiplayer sets of multiplayer gameplay controls 339, 349 about a central line of symmetry (A-A) of the PED such that the layout of the two sets of multiplayer gameplay controls have reflective symmetry about the central line of symmetry (A-A), but the function of at least one of the gameplay controls in a multiplayer set is assigned using rotational symmetry with respect to the corresponding gameplay control in the other multiplayer set.

It will be appreciated that this is markedly different from how a dedicated two-player handheld game may be expected to be arranged, as it would have full rotational symmetry of both function and layout, such that the positional relationships of the controls are consistent for each player. In other words, the physical layout of the controls would not be reversed for each player as in the present embodiments.

Referring now again to Figure 1B, then as noted above the PED may have a rear touch panel 320. Because the rear touch panel is substantially aligned with the display, the reflective line of symmetry (A-A) passes though this panel, typically bisecting it. Again as noted previously, the panel is capable of multi-touch detection. Consequently, optionally the rear panel can be logically partitioned or bisected along the line of symmetry, allowing both players to use their respective portions of the panel as a further game input.

In this case, a region of the panel a predetermined distance from either side of the notional line of symmetry can be treated as a non-responsive or neutral zone, to reduce player confusion. For example a new touch within this zone may be ignored, whilst a movement into this zone from one user's side may be tracked only for a predetermined period of time, or may result in a reduced response from the game, or trigger a warning on the display. Other means of warning a user that they have strayed into this zone will be apparent to the skilled person. For example, within a tennis game the net may be displayed at a position corresponding to the notional line of symmetry, and the position of the respective tennis players within the game is controlled by the rear touch panel. In this case the tennis player characters thus give a direct indicator of where the user's touch is on the rear panel with respect to the notional line of symmetry, and the net provides a graphical indication of the point beyond which the user has no control on the rear panel.

Finally, as noted previously the PED may be capable of wireless communication, such as for example by Bluetooth ® to form ad-hoc wireless networks with other PEDs. Consequently two PEDs, each in a multiplayer mode as described herein, may wirelessly co-operate to provide a three- or four-player game.

The above arrangements can thus be summarised as follows. An embodiment of the present invention allows the PED to be used as normal for single player games. However for multiplayer games, the PED is notionally rotated through 90 degrees and used as a head-to-head gaming device for two players, taking advantage of the fact that each end of the device (i.e. either side of the display) has a similar set of controls available for these users. Notably, unlike a dedicated two-player device, the physical arrangement of the controls are reversed for each player (i.e. player A will have the joystick to the right of their buttons, whilst player B will have the joystick to the left of their buttons). However, the functions of the controls individually remain consistent for each user; i.e. 'up' on the joystick will be towards the display for each user, and the arrangement of functions within the group of four buttons will be the same from each user's perspective. In addition, the rear touch panel can also be logically divided in half to provide a region for each user.

Thus more generally in an embodiment of the present invention, a handheld entertainment device such as a PED has a display and a set of controls disposed on either side of the display to form two separate subsets of controls, with each subset containing equivalent physical controls. In a first, conventional, single player mode (or 'landscape mode' as shown in Figure 1A), both sets of controls are used by a single player, and a first input function set used by a game is distributed over both sets of controls (e.g. directional control on the left, reticule and function selection on the right, as described previously). However in a second, multiplayer mode (or 'portrait mode' as shown in Figure 4), each set of controls is ascribed a complete, second, input function set for a separate respective user to use in a game. Hence each subset of controls on the left and right side of the device (or top and bottom, in a head-to head portrait configuration as shown in Figure 4), both have the same set of functions (e.g. directional control with the respective joystick and function selection with the respective four button set). As noted above, the physical layout of the controls or groups of controls for each player will be reversed, but each control or group of controls within each subset will be consistent between players (i.e. rotationally symmetrical).

Hence in a summary embodiment of the present invention, a portable entertainment device 10 (such as the PSV), suitable for playing a multiplayer videogame, comprises a display 200, and a set of single-player gameplay controls (330-336 and 340-346) disposed upon the portable entertainment device on either side of the display such that they have reflective physical symmetry about a central line of symmetry (A-A) of the display. As such they form a subset of controls on either side of the display. In a single player game, a first input function set used by the game is distributed over both subsets of controls for use by a single player. This function set may be relatively rich in that it uniquely uses more than half the set of controls disposed on the PED. By contrast, in a multiplayer videogame a second input function set used by the game for each player is ascribed to each subset of controls, such that the set of single-player gameplay controls is functionally divided into two multiplayer subsets of multiplayer gameplay controls (339, 349) about the central line of symmetry (i.e. a first subset 339 comprising the controls 330-336 to the left of the display as shown in Figure 1A, and a second subset 349 comprising the controls 340-346 to the right of the display as shown in Figure 1A). In this case the function set may be relatively poor compared to the single player game, in that it can only uniquely use the respective subset of controls for each player and hence at most half of the total set of controls available. Nevertheless each subset of controls has substantially the same abilities due to their symmetrical physical arrangement, and so with suitable game design a well-balanced multiplayer game can be controlled.

Notably, however, the function of at least one of the gameplay controls in one of these multiplayer sets is assigned using rotational symmetry with respect to the corresponding gameplay control in the other multiplayer set.

Thus for example, where each set of multiplayer gameplay controls comprises a joystick (335, 345), the function of the joystick in one set of multiplayer gameplay controls is rotationally symmetrical to the function of the joystick in the other set of multiplayer gameplay controls, as described previously. Similarly, where each set of multiplayer gameplay controls comprises a joypad (330, 340) having a plurality of buttons (331-334, 341-344), the functions of the joypad buttons in one set of multiplayer gameplay controls is rotationally symmetrical to the functions of the joypad buttons in the other set of multiplayer gameplay controls, as described previously. Alternatively, however, the functions of the joypad buttons in one set of multiplayer gameplay controls can be made reflectively symmetrical to the functions of the joypad buttons in the other set of multiplayer gameplay controls, as described previously. As noted previously, in any event one or more of these buttons in one set of multiplayer gameplay controls may be shaped and/or marked differently to the or each corresponding button in the other set of multiplayer gameplay controls.

In this summary embodiment, the portable entertainment device may comprise a touch-sensitive input panel on the rear of the device substantially aligned with the display, operable to detect a plurality of simultaneous touches; and then as described previously, the portable entertainment device is operable to parse touches from respective halves of the input panel as inputs from respective players of the videogame.

Likewise, the portable entertainment device may comprise wireless communication means arranged in operation to communicate with a similar portable entertainment device to co-operatively play a videogame between two portable entertainment devices; and then as described previously the portable entertainment device is operable to co-operatively play a videogame with another portable entertainment device with a total of up to four players (i.e. with two on one device and one or two on the other device).

Finally, when the portable entertainment device is operating a single-player game, the portable entertainment device assigns to at least one of the single-player gameplay controls a function that is not rotationally or reflectively symmetrically duplicated by another gameplay control. Hence typically it assigns a pattern of functions to the buttons on the device that does not repeat in a reflective or rotational symmetric manner.

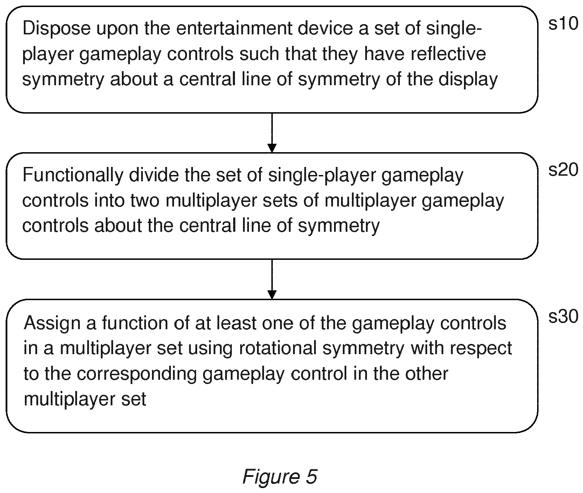

Referring now to Figure 5, a method of control for a multiplayer video game run on an entertainment device comprising a display, comprises:
in a first step s10, disposing upon the entertainment device a set of single-player gameplay controls such that they have reflective symmetry about a central line of symmetry of the display;
in a second step s20, functionally dividing the set of single-player gameplay controls into two multiplayer sets of multiplayer gameplay controls about the central line of symmetry; and in a third step s30, assigning a function of at least one of the gameplay controls in a multiplayer set using rotational symmetry with respect to the corresponding gameplay control in the other multiplayer set.

It will be apparent to a person skilled in the art that variations in the above method corresponding to operation of the various embodiments of the apparatus as described and claimed herein are considered within the scope of the present invention, including but not limited to:
- where each set of multiplayer gameplay controls comprises a joystick, the step of assigning a function comprises assigning the function of the joystick in one set of multiplayer gameplay controls in a rotationally symmetrical manner to the function of the joystick in the other set of multiplayer gameplay controls;
- where each set of multiplayer gameplay controls comprises a joypad having a plurality of buttons, the step of assigning a function comprises assigning functions of the joypad buttons in one set of multiplayer gameplay controls in a rotationally symmetrical manner to the functions of the joypad buttons in the other set of multiplayer gameplay controls;

- where the entertainment device comprises a touch-sensitive input panel on the rear of the device substantially aligned with the display that is operable to detect a plurality of simultaneous touches, then parsing touches from respective halves of the input panel as inputs from respective players of the videogame; and
- where the entertainment device comprises wireless communication means arranged in operation to communicate with a similar entertainment device to co-operatively play a videogame between two entertainment devices, then co-operatively playing a videogame with another portable entertainment device with a total of up to four players.

Finally, it will be appreciated that the methods disclosed herein may be carried out on conventional hardware suitably adapted as applicable by software instruction or by the inclusion or substitution of dedicated hardware.

Thus the required adaptation to existing parts of a conventional equivalent device may be implemented in the form of a computer program product or similar object of manufacture comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable circuit suitable to use in adapting the conventional equivalent device.

## Claims

1. A portable entertainment device (10), comprising:
a display (200);
a set of single-player gameplay controls (331-336, 341-346) disposed upon either side of the display, such that they have reflective physical symmetry about a central line of symmetry (A-A) of the display, thereby forming a subset of controls on either side of the display; and
a touch-sensitive input panel (320) on the rear of the device substantially aligned with the display, operable to detect a plurality of simultaneous touches;
and wherein
in a single player game, a first input function set used by the game is distributed over both subsets of controls for use by a single player; and
in a multiplayer videogame, a second input function set used by the game for each player is ascribed to each subset of controls, such that the set of single-player gameplay controls are functionally divided into two multiplayer subsets (331-336, 341-346) of multiplayer gameplay controls about the central line of symmetry;
the function of at least one of the gameplay controls in a multiplayer subset is assigned using rotational symmetry with respect to the corresponding gameplay control in the other multiplayer subset; and **characterised in that**
the portable entertainment device is operable to parse touches from respective halves of the input panel as inputs from respective players of a multiplayer videogame.

2. A portable entertainment device according to claim 1, in which each set of multiplayer gameplay controls comprises a joystick (335, 345), and the function of the joystick in one set of multiplayer gameplay controls is rotationally symmetrical to the function of the joystick in the other set of multiplayer gameplay controls.

3. A portable entertainment device according to claim 1 or claim 2, in which each set of multiplayer gameplay controls comprises a joypad having a plurality of buttons (331-334, 341-344), and the functions of the joypad buttons in one set of multiplayer gameplay controls is rotationally symmetrical to the functions of the joypad buttons in the other set of multiplayer gameplay controls.

4. A portable entertainment device according to claim 1 or claim 2, in which each set of multiplayer gameplay controls comprises a joypad having a plurality of buttons (331-334, 341-344), and the functions of the joypad buttons in one set of multiplayer gameplay controls is reflectively symmetrical to the functions of the joypad buttons in the other set of multiplayer gameplay controls.

5. A portable entertainment device according to any one of the preceding claims, in which one or more buttons in one set of multiplayer gameplay controls is shaped differently to the or each corresponding button in the other set of multiplayer gameplay controls.

6. A portable entertainment device according to any one of the preceding claims, in which one or more buttons in one set of multiplayer gameplay controls is marked differently to the or each corresponding button in the other set of multiplayer gameplay controls.

7. A portable entertainment device according to any one of the preceding claims, comprising:
wireless communication means (140) arranged in operation to communicate with a similar portable entertainment device to co-operatively play a videogame between two portable entertainment devices; and in which
the portable entertainment device is operable to co-operatively play a videogame with another portable entertainment device with a total of up to four players.

8. A portable entertainment device according to any one of the preceding claims in which for a single-player game, the portable entertainment device assigns to at least one of the single-player gameplay controls a function that is not rotationally or reflectively symmetrically duplicated by another gameplay control.

9. A method of control for an entertainment device (10) comprising a display (200), the method comprising the steps of
disposing upon either side of the display a set of single-player gameplay controls (331-336, 341-346) such that they have reflective physical symmetry about a central line of symmetry of the display, thereby forming a subset of controls on either side of the display;
disposing a touch-sensitive input panel (320) on the rear of the device substantially aligned with the display, operable to detect a plurality of simultaneous touches;
in a single player game, distributing a first input function set used by the game over both subsets of controls for use by a single player; and
in a multiplayer videogame, ascribing a second input function set used by the game for each player to each subset of controls, thereby functionally dividing the set of single-player gameplay controls into two multiplayer subsets (331-336, 341-346) of multiplayer gameplay controls about the central line of symmetry;
assigning a function of at least one of the gameplay controls in a multiplayer subset using rotational symmetry with respect to the corresponding gameplay control in the other multiplayer subset; and **characterised by**
parsing touches from respective halves of the input panel as inputs from respective players of a multiplayer videogame.

10. A method according to claim 9, in which each set of multiplayer gameplay controls comprises a joystick (335, 345), and the step of assigning a function comprises assigning the function of the joystick in one set of multiplayer gameplay controls in a rotationally symmetrical manner to the function of the joystick in the other set of multiplayer gameplay controls.

11. A method according to claim 9 or claim 10, in which each set of multiplayer gameplay controls comprises a joypad having a plurality of buttons (331-334, 341-344), and the step of assigning a function comprises assigning functions of the joypad buttons in one set of multiplayer gameplay controls in a rotationally symmetrical manner to the functions of the joypad buttons in the other set of multiplayer gameplay controls.

12. A method according to any one of claims 9 to 11, in which the entertainment device comprises wireless communication means (140) arranged in operation to communicate with a similar entertainment device to co-operatively play a videogame between two entertainment devices; the method comprising the step of:
co-operatively playing a videogame with another portable entertainment device with a total of up to four players.

## Patentansprüche

1. Tragbares Unterhaltungsgerät (10), welches Folgendes umfasst:
ein Display (200);
einen Satz Einzelspieler-Spielsteuerungen (331-336, 341-346), die auf jeder Seite des Displays angeordnet sind, derart, dass sie eine physische Spiegelsymmetrie um eine zentrale Symmetrielinie (A-A) des Displays aufweisen, wodurch ein Teilsatz von Steuerungen auf jeder Seite des Displays gebildet wird; und
ein berührungsempfindliches Eingabefeld (320) an der Rückseite des Gerätes, das im Wesentlichen an dem Display ausgerichtet ist, das zum Erkennen mehrerer gleichzeitiger Berührungen geeignet ist;
und wobei
bei einem Einzelspielerspiel, ein erster Eingabefunktionssatz, der durch das Spiel verwendet wird, über beide Teilsätze der Steuerungen zur Verwendung durch einen Einzelspieler verteilt ist; und
bei einem Mehrspieler-Videospiel, ein zweiter Eingabefunktionssatz, der durch das Spiel für jeden Spieler verwendet wird, jedem Teilsatz der Steuerungen zugeschrieben ist, derart, dass der Satz von Einzelspieler-Spielsteuerungen funktionell in zwei Mehrspieler-Teilsätze (331-336, 341-346) von Mehrspieler-Spielsteuerungen um die zentrale Symmetrielinie aufgeteilt ist;
die Funktion von mindestens einer der Spielsteuerungen in einem Mehrspieler-Teilsatz unter Verwendung von Rotationssymmetrie in Bezug auf die entsprechende Spielsteuerung in dem anderen Mehrspieler-Teilsatz zugewiesen wird; und **dadurch gekennzeichnet, dass**
das tragbare Unterhaltungsgerät zum Parsen von Berührungen von entsprechenden Hälften des Eingabefeldes als Eingaben von entsprechenden Spielern eines Mehrspieler-Videospiels geeignet ist.

2. Tragbares Unterhaltungsgerät nach Anspruch 1, bei welchem jeder Satz von Mehrspieler-Spielsteuerungen einen Joystick (335, 345) umfasst und die Funktion des Joysticks in einem Satz von Mehrspieler-Spielsteuerungen rotationssymmetrisch zu der Funktion des Joysticks in dem anderen Satz von Mehrspieler-Spielsteuerungen ist.

3. Tragbares Unterhaltungsgerät nach Anspruch 1 oder 2, bei welchem jeder Satz von Mehrspieler-Spielsteuerungen ein Joypad mit mehreren Knöpfen (331-334, 341-344) umfasst und die Funktionen der Joypad-Knöpfe in einem Satz von Mehrspieler-Spielsteuerungen rotationssymmetrisch zu den Funktionen der Joypad-Knöpfe in dem anderen Satz von Mehrspieler-Spielsteuerungen sind.

4. Tragbares Unterhaltungsgerät nach Anspruch 1 oder 2, bei welchem jeder Satz von Mehrspieler-Spielsteuerungen ein Joypad mit mehreren Knöpfen (331-334, 341-344) umfasst und die Funktionen der Joypad-Knöpfe in einem Satz von Mehrspieler-Spielsteuerungen spiegelsymmetrisch zu den Funktionen der Joypad-Knöpfe in dem anderen Satz von Mehrspieler-Spielsteuerungen sind.

5. Tragbares Unterhaltungsgerät nach einem der vorhergehenden Ansprüche, bei welchem ein oder mehrere Knöpfe in einem Satz von Mehrspieler-Spielsteuerungen unterschiedlich zu dem oder jedem entsprechenden Knopf in dem anderen Satz von Mehrspieler-Spielsteuerungen geformt sind.

6. Tragbares Unterhaltungsgerät nach einem der vorhergehenden Ansprüche, bei welchem ein oder mehrere Knöpfe in einem Satz von Mehrspieler-Spielsteuerungen unterschiedlich zu dem oder jedem entsprechenden Knopf in dem anderen Satz von Mehrspieler-Spielsteuerungen gekennzeichnet sind.

7. Tragbares Unterhaltungsgerät nach einem der vorhergehenden Ansprüche, welches Folgendes umfasst:
drahtlose Kommunikationsmittel (140), die in Betrieb zum Kommunizieren mit einem ähnlichen tragbaren Unterhaltungsgerät zum gemeinsamen Spielen eines Videospiels zwischen zwei tragbaren Unterhaltungsgeräten geeignet sind; und bei welchem das tragbare Unterhaltungsgerät zum gemeinsamen Spielen eines Videospiels mit einem anderen tragbaren Unterhaltungsgerät mit insgesamt bis zu vier Spielern geeignet ist.

8. Tragbares Unterhaltungsgerät nach einem der vorhergehenden Ansprüche, bei welchem, für ein Einzelspielerspiel, das tragbare Unterhaltungsgerät mindestens einer der Einzelspieler-Spielsteuerungen eine Funktion zuweist, die nicht rotations- oder spiegelsymmetrisch durch eine andere Spielsteuerung dupliziert wird.

9. Steuerungsverfahren für ein Unterhaltungsgerät (10), welches ein Display (200) umfasst, wobei das Verfahren folgende Schritte umfasst:
Anordnen, auf jeder Seite des Displays, eines Satzes von Einzelspieler-Spielsteuerungen (331-336, 341-346), derart, dass sie physische Spiegelsymmetrie um eine zentrale Symmetrielinie des Displays aufweisen, wodurch ein Teilsatz von Steuerungen auf jeder Seite des Displays gebildet wird;
Anordnen eines berührungsempfindlichen Eingabefeldes (320) an der Rückseite des Gerätes, das im Wesentlichen an dem Display ausgerichtet ist, das zum Erkennen mehrerer gleichzeitiger Berührungen geeignet ist;
bei einem Einzelspielerspiel, Verteilen eines ersten Eingabefunktionssatzes, der durch das Spiel verwendet wird, über beide Teilsätze von Steuerungen zur Verwendung durch einen einzelnen Spieler; und
bei einem Mehrspieler-Videospiel, Zuschreiben eines zweiten Eingabefunktionssatzes, der durch das Spiel für jeden Spieler verwendet wird, zu jedem Teilsatz von Steuerungen, wodurch der Satz von Einzelspieler-Spielsteuerungen funktionell in zwei Mehrspieler-Teilsätze (331-336, 341-346) von Mehrspieler-Spielsteuerungen um die zentrale Symmetrielinie aufgeteilt wird;
Zuweisen einer Funktion von mindestens einer der Spielsteuerungen in einem Mehrspieler-Teilsatz unter Verwendung von Rotationssymmetrie in Bezug auf die entsprechende Spielsteuerung in dem anderen Mehrspieler-Teilsatz; und **gekennzeichnet durch** das Parsen von Berührungen von entsprechenden Hälften des Eingabefeldes als Eingaben von entsprechenden Spielern eines Mehrspieler-Videospiels.

10. Verfahren nach Anspruch 9, bei welchem jeder Satz von Mehrspieler-Spielsteuerungen einen Joystick (335, 345) umfasst und der Schritt des Zuweisens einer Funktion das Zuweisen der Funktion des Joysticks in einem Satz von Mehrspieler-Spielsteuerungen in einer rotationssymmetrischen Art und Weise zu der Funktion des Joysticks in dem anderen Satz von Mehrspieler-Spielsteuerungen umfasst.

11. Verfahren nach Anspruch 9 oder 10, bei welchem jeder Satz von Mehrspieler-Spielsteuerungen ein Joypad mit mehreren Knöpfen (331-334, 341-344) umfasst und der Schritt des Zuweisens einer Funktion das Zuweisen von Funktionen der Joypad-Knöpfe in einem Satz von Mehrspieler-Spielsteuerungen in einer rotationssymmetrischen Art und Weise zu den Funktionen der Joypad-Knöpfe in dem anderen Satz von Mehrspieler-Spielsteuerungen umfasst.

12. Verfahren nach einem der Ansprüche 9 bis 11, bei welchem das Unterhaltungsgerät drahtlose Kommunikationsmittel (140) umfasst, die in Betrieb zum Kommunizieren mit einem ähnlichen Unterhaltungsgerät zum gemeinsamen Spielen eines Videospiels zwischen zwei Unterhaltungsgeräten geeignet sind, wobei das Verfahren folgenden Schritt umfasst:
gemeinsames Spielen eines Videospiels mit einem anderen tragbaren Unterhaltungsgerät mit insgesamt bis zu vier Spielern.

## Revendications

1. Dispositif de divertissement portable (10), comprenant :
un écran (200) ;
un ensemble de commandes de jeu en mode solo (331-336, 341-346) disposées de chaque côté de l'écran, de façon qu'elles aient une symétrie physique réflective autour d'une ligne de symétrie centrale (A-A) de l'écran, en formant ainsi un sous-ensemble de commandes de chaque côté de l'écran ; et
un panneau de saisie tactile (320) sur l'arrière du dispositif essentiellement aligné avec l'écran, apte à détecter une pluralité de touchés simultanés ;
et dans lequel
dans un jeu en mode solo, un premier ensemble de fonctions de saisie utilisé par le jeu est réparti sur deux sous-ensembles de commandes à utiliser par un seul joueur ; et
dans un jeu vidéo multijoueur, un deuxième ensemble de fonctions de saisie utilisé par le jeu pour chaque joueur est attribué à chaque sous-ensemble de commandes, de telle sorte que l'ensemble de commandes de jeu en mode solo soit subdivisé fonctionnellement en deux sous-ensembles multijoueur (331-336, 341-346) de commandes de jeu multijoueur autour de la ligne de symétrie centrale ;
la fonction d'au moins l'une des commandes de jeu dans un sous-ensemble multijoueur est attribuée à l'aide d'une symétrie de révolution par rapport à la commande de jeu correspondante de l'autre sous-ensemble multijoueur ; et **caractérisé en ce que**
le dispositif de divertissement portable est apte à analyser des touchers sur des moitiés respectives du panneau de saisie en tant que saisies émanant de joueurs respectifs d'un jeu vidéo multijoueur.

2. Dispositif de divertissement portable selon la revendication 1, dans lequel chaque ensemble de commandes de jeu multijoueur comprend un manche à balai (335, 345), et la fonction du manche à balai d'un ensemble de commandes de jeu multijoueur est symétrique par symétrie de révolution de la fonction du manche à balai de l'autre ensemble de commandes de jeu multijoueur.

3. Dispositif de divertissement portable selon la revendication 1 ou la revendication 2, dans lequel chaque ensemble de commandes de jeu multijoueur comprend une manette ayant une pluralité de boutons (331-334, 341-344), et les fonctions des boutons de la manette d'un ensemble de commandes de jeu multijoueur sont symétriques par symétrie de révolution des fonctions des boutons de la manette de l'autre ensemble de commandes de jeu multijoueur.

4. Dispositif de divertissement portable selon la revendication 1 ou la revendication 2, dans lequel chaque ensemble de commandes de jeu multijoueur comprend une manette ayant une pluralité de boutons (331-334, 341-344), et les fonctions des boutons de la manette d'un ensemble de commandes de jeu multijoueur sont symétriques par symétrie réflective des fonctions des boutons de la manette de l'autre ensemble de commandes de jeu multijoueur.

5. Dispositif de divertissement portable selon l'une quelconque des revendications précédentes, dans lequel un ou plusieurs boutons d'un ensemble de commandes de jeu multijoueur ont une forme différente de celle du ou de chaque bouton correspondant de l'autre ensemble de commandes de jeu multijoueur.

6. Dispositif de divertissement portable selon l'une quelconque des revendications précédentes, dans lequel un ou plusieurs boutons d'un ensemble de commandes de jeu multijoueur ont un marquage différent de celui du ou de chaque bouton correspondant de l'autre ensemble de commandes de jeu multijoueur.

7. Dispositif de divertissement portable selon l'une quelconque des revendications précédentes, comprenant :
des moyens de communication sans fil (140) conçus pour, en fonctionnement, communiquer avec un dispositif de divertissement portable similaire pour permettre à deux dispositifs de divertissement portables de jouer de manière coopérative à un jeu vidéo ; et dans lequel
le dispositif de divertissement portable est apte à jouer de manière coopérative à un jeu vidéo avec un autre dispositif de divertissement portable, avec un nombre de joueurs total allant jusqu'à 4.

8. Dispositif de divertissement portable selon l'une quelconque des revendications précédentes, dans lequel, pour un jeu en mode solo, le dispositif de divertissement portable attribue à au moins l'une des commandes de jeu en mode solo une fonction qui n'est pas une duplication symétrique par symétrie de révolution ou réflective d'une autre commande de jeu.

9. Procédé de commande d'un dispositif de divertissement (10) comprenant un écran (200), le procédé comprenant les étapes consistant à :
disposer de chaque côté de l'écran, un ensemble de commandes de jeu en mode solo (331-336, 341-346), de façon qu'elles aient une symétrie physique réflective autour d'une ligne de symétrie centrale de l'écran, en formant ainsi un sous-ensemble de commandes de chaque côté de l'écran ;
disposer un panneau de saisie tactile (320) sur l'arrière du dispositif essentiellement aligné avec l'écran, apte à détecter une pluralité de touchés simultanés ;
dans un jeu en mode solo, répartir un premier ensemble de fonctions de saisie utilisé par le jeu sur deux sous-ensembles de commandes à utiliser par un seul joueur ; et
dans un jeu vidéo multijoueur, attribuer un deuxième ensemble de fonctions de saisie utilisé par le jeu pour chaque joueur à chaque sous-ensemble de commandes, pour ainsi subdiviser fonctionnellement l'ensemble de commandes de jeu en mode solo en deux sous-ensembles multijoueur (331-336, 341-346) de commandes de jeu multijoueur autour de la ligne de symétrie centrale ;
attribuer une fonction d'au moins l'une des commandes de jeu dans un sous-ensemble multijoueur à l'aide d'une symétrie de révolution par rapport à la commande de jeu correspondante de l'autre sous-ensemble multijoueur ; et **caractérisé par**
l'analyse de touchers sur des moitiés respectives du panneau de saisie en tant que saisies émanant de joueurs respectifs d'un jeu vidéo multijoueur.

10. Procédé selon la revendication 9, dans lequel chaque ensemble de commandes de jeu multijoueur comprend un manche à balai (335, 345), et l'étape d'attribution d'une fonction comprend l'attribution de la fonction du manche à balai d'un ensemble de commandes de jeu multijoueur de façon symétrique par symétrie de révolution de la fonction du manche à balai de l'autre ensemble de commandes de jeu multijoueur.

11. Procédé selon la revendication 9 ou la revendication 10, dans lequel chaque ensemble de commandes de jeu multijoueur comprend une manette ayant une pluralité de boutons (331-334, 341-344), et l'étape d'attribution d'une fonction comprend l'attribution de fonctions des boutons de la manette d'un ensemble de commandes de jeu multijoueur de façon symétrique par symétrie de révolution des fonctions des boutons de la manette de l'autre ensemble de commandes de jeu multijoueur.

12. Procédé selon l'une quelconque des revendications 9 à 11, dans lequel le dispositif de divertissement comprend des moyens de communication sans fil (140) conçus pour, en fonctionnement, communiquer avec un dispositif de divertissement similaire pour permettre à deux dispositifs de divertissement de jouer de manière coopérative à un jeu vidéo ; le procédé comprenant l'étape de :
jeu coopératif à un jeu vidéo avec un autre dispositif de divertissement portable, avec un nombre de joueurs total allant jusqu'à 4.
